# EUROPÄISCHE PATENTSCHRIFT

(11) **EP 1 851 000 B1**
(45) Veröffentlichungstag und Bekanntmachung des Hinweises auf die Patenterteilung: **24.09.2008**
(21) Anmeldenummer: 06706218.2
(22) Anmeldetag: 13.01.2006
(51) Int. Cl.: B23Q 11/00, B23B 47/34

(54) **BOHRSCHMUTZAUFFANGGERÄT**
COLLECTOR FOR BORE CUTTINGS
APPAREIL POUR RAMASSER LES SALETES OCCASIONNEES LORS D'UN PERCAGE

(30) Priorität: 18.02.2005 DE 102005009314
(43) Veröffentlichungstag der Anmeldung: 07.11.2007
(73) Patentinhaber: Alfred Kärcher GmbH & Co. KG, 71364 Winnenden (DE)
(72) Erfinder: GASSMANN, Jürgen, 71409 Schwaikheim (DE); RUST, Hendrik, 73630 Remshalden-Hebsack (DE); STEWEN, Christian, 71627 Marbach am Neckar (DE)
(74) Vertreter: Hoeger, Stellrecht & Partner Patentanwälte
(86) Internationale Anmeldenummer: PCT/EP2006/000253
(87) Internationale Veröffentlichungsnummer: WO 2006/087054

(56) Entgegenhaltungen:
- WO-A-90/09867
- DE-A1- 19 855 887
- DE-C- 589 558
- DE-U1- 8 021 785
- GB-A- 425 736
- US-A1- 2002 141 836

## Beschreibung

Die Erfindung betrifft ein Bohrschmutzauffanggerät zum Auffangen von beim Einbringen einer Bohrung in einen Untergrund anfallendem Bohrschmutz, mit einem Gehäuse, das eine zum Untergrund ausrichtbare Stirnwand und eine im Abstand zu dieser angeordnete Rückwand umfaßt, wobei die Stirnwand und die Rückwand fluchtend zueinander angeordnete Gehäuseöffnungen aufweisen, die von einem Bohrer durchsetzbar sind, wobei das Gehäuse eine den Bohrer beim Herausziehen aus dem Gehäuse abreinigende Reinigungseinrichtung und einen Bohrschmutzsammelraum umgibt, und wobei mittels der Reinigungseinrichtung der rotierende Bohrer beim Bohren abgereinigt werden kann.

Derartige Bohrschmutzauffanggeräte sind aus WO 90/09867 A, US 2002/141836 A1, DE 589 558 C, GB 425 736 A und DE 198 55 887 A1 bekannt. Mit ihrer Hilfe kann der beim Einbringen einer Bohrung in einen Untergrund anfallende Bohrschmutz, das heißt das Bohrmaterial und Bohrstaub, aufgefangen werden. Das Gerät wird hierzu an den Untergrund angelegt. Anschließend kann ein drehfest an einer Bohrmaschine gehaltener Bohrer durch das Gehäuse des Gerätes hindurch geführt werden und eine Bohrung kann in den Untergrund eingebracht werden. Der anfallende Bohrschmutz sammelt sich innerhalb des Gehäuses im Bohrschmutzsammelraum an. Nach dem Bohren kann der Bohrer wieder aus dem Gehäuse herausgezogen werden, und das Gehäuse kann anschließend entleert werden.

In der DE 80 21 785 U1 wird vorgeschlagen, innerhalb des Gehäuses eine Bürste anzuordnen, mit deren Hilfe der Bohrer beim Herausziehen aus dem Gehäuse abgestreift werden kann. Es besteht aber die Gefahr, daß nicht sämtlicher Bohrschmutz vom Bohrer entfernt wird, so daß während des Bohrens und beim Herausziehen des Bohrers Bohrschmutz aus dem Gehäuse entweichen kann.

In der EP 1 457 288 A1 wird ebenso wie in der WO 99/44786 A1 ein Bohrschmutzauffanggerät beschrieben, das an ein externes Sauggerät angeschlossen werden kann. Dies führt zu einer umständlichen Handhabung des Bohrschmutzauffanggeräts.

Aufgabe der vorliegenden Erfindung ist es, ein Bohrschmutzauffanggerät der eingangs genannten Art derart weiterzubilden, daß beim Bohren anfallender Bohrschmutz zuverlässig aufgefangen werden kann und beim Herausziehen des Bohrers aus dem Gehäuse kein Bohrschmutz entweichen kann.

Diese Aufgabe wird durch ein Bohrschmutzauffanggerät mit den Merkmalen von Patentanspruch 1 gelöst.

Das erfindungsgemäße Bohrschmutzauffanggerät umfasst eine Reinigungseinrichtung, mit der der Bohrer sowohl beim Herausziehen aus dem Gehäuse als auch beim Einbringen einer Bohrung in den Untergrund abgereinigt werden kann. Beim Bohren anfallender Bohrschmutz kann zuverlässig im Bohrschmutzsammelraum gesammelt werden, indem der rotierende Bohrer während seines Einsatzes innerhalb des Gehäuses mittels der Reinigungseinrichtung abgereinigt wird. Der rotierende Bohrer bildet einen Schneckenförderer aus, der den anfallenden Bohrschmutz aus dem Bohrloch heraustransportiert und in das Innere des Bohrschmutzauffanggeräts überführt. Im Gehäuseinnern wird dann der rotierende Bohrer von der dort angeordneten Reinigungseinrichtung abgereinigt.

Nach Einbringen einer Bohrung in den Untergrund wird der in der Regel stillstehende Bohrer aus dem Gehäuse herausgezogen. Hierbei wird noch am Bohrer anhaftender Bohrschmutz mittels der innerhalb des Gehäuses angeordneten Reinigungseinrichtung vom Bohrer abgestreift. Es ist somit zum einen sichergestellt, daß während des Bohrens der anfallende Bohrschmutz aufgefangen werden kann, und zum anderen ist gewährleistet, daß der Bohrer aus dem Gehäuse herausgezogen werden kann, ohne daß die Gefahr besteht, daß hierbei Bohrschmutz aus dem Gehäuse entweichen kann.

Erfindungsgemäß umfaßt die Reinigungseinrichtung eine erste, den Bohrer beim Herausziehen aus dem Gehäuse abreinigende Reinigungseinheit und eine zweite, den rotierenden Bohrer beim Bohren abreinigende Reinigungseinheit, wobei die zweite Reinigungseinheit zwischen der ersten Reinigungseinheit und der stirnseitigen Gehäuseöffnung angeordnet ist. Während des Bohrens wird der rotierende Bohrer zunächst von der zweiten Reinigungseinheit abgereinigt, insbesondere wird die mindestens eine wendelförmige Bohrnut des Bohrers von Bohrschmutz befreit. Bohrschmutzreste, die von der zweiten Reinigungseinheit nicht erfaßt werden, werden in der Bohrnut vom rotierenden Bohrer zur ersten Reinigungseinheit überführt und von dieser abgestreift. Die Reinigungswirkung der ersten Reinigungseinheit entfaltet sich somit nicht nur beim Herausziehen des Bohrers sondern auch während des Bohrens. Durch die Kombination der beiden Reinigungseinheiten wird eine optimale Abreinigung des Bohrers erzielt.

Zum Abreinigen des Bohrers beim Herausziehen aus dem Gehäuse umfaßt die Reinigungseinrichtung bei einer vorteilhaften Ausführungsform zumindest eine erste Reinigungsbürste. Alternativ oder ergänzend können beispielsweise auch flexible Reinigungsstreifen zum Einsatz kommen, beispielsweise Gummistreifen, die den am Bohrer anhaftenden Bohrschmutz abstreifen.

Bevorzugt ist eine erste Reinigungsbürste ringförmig ausgestaltet und vom Bohrer durchsetzbar. So ist auf konstruktiv einfache Weise sichergestellt, daß der Bohrer entlang seines gesamten Umfangs von Bohrschmutz befreit wird.

Es kann auch vorgesehen sein, daß eine erste Reinigungsbürste als Doppelbürste ausgestaltet ist und zwei einander zugewandte Borstenreihen aufweist, die zwischen sich den Bohrer aufnehmen. Die Borstenreihen sind besonders kostengünstig herstellbar, und durch den Einsatz zweier einander zugewandter Borstenreihen kann der Bohrer in Umfangsrichtung praktisch vollständig abgereinigt werden.

Vorzugsweise weist die Reinigungseinrichtung eine den Bohrer beim Herausziehen abreinigende Reinigungseinheit, die die rückseitige Gehäuseöffnung zumindest teilweise überdeckt. Dadurch ist sichergestellt, daß auch beim Einbringen einer Bohrung in eine Decke kein Bohrschmutz durch das Gehäuse hindurch fallen kann, vielmehr wird sämtlicher Bohrschmutz innerhalb des Gehäuses von der Reinigungseinheit zurückgehalten, die die rückseitige Gehäuseöffnung zumindest teilweise überdeckt und diese zusammen mit dem das Gehäuse durchgreifenden Bohrer verschließt.

Von Vorteil ist es, wenn die Reinigungseinrichtung eine Reinigungseinheit aufweist, die der stirnseitigen Gehäuseöffnung zugewandt eine Abdeckung umfaßt. Dadurch wird die Gefahr besonders gering gehalten, daß beim Einbringen einer Bohrung in eine Decke Bohrschmutz durch das Gehäuse hindurch fällt.

Vorzugsweise ist die Abdeckung an den Außenumfang des Bohrers anlegbar.

Günstig ist es, wenn die Abdeckung aus einem flexiblen Material, beispielsweise einem gummiartigen Material, gefertigt ist. Es kann beispielsweise vorgesehen sein, daß die Abdeckung in Form einer Membran ausgebildet ist.

Als vorteilhaft hat es sich erwiesen, die Abdeckung kegelmantelförmig auszugestalten, denn dadurch kann auf konstruktiv einfache Weise Bohrschmutz in radialer Richtung vom Bohrer entfernt werden, der die Abdeckung zentral durchgreift.

Bevorzugt überdeckt die Abdeckung die rückseitige Gehäuseöffnung. Dadurch wird vermieden, daß beim Einbringen einer Bohrung in eine Decke Bohrschmutz aus dem Gehäuse entweichen kann.

Die Reinigungseinrichtung kann zur Abreinigung des rotierenden Bohrers eine in das Gehäuse des Bohrschmutzauffanggeräts integrierte Turbine umfassen, mit deren Hilfe der Bohrer während seines Einsatzes innerhalb des Gehäuses abgesaugt oder abgeblasen werden kann. Es hat sich allerdings gezeigt, daß eine äußerst zuverlässige Abreinigung des Bohrers dadurch erzielt werden kann, daß die den rotierenden Bohrer abreinigende Reinigungseinrichtung zumindest eine zweite Reinigungsbürste umfaßt.

So kann beispielsweise vorgesehen sein, daß eine zweite Reinigungsbürste ringförmig ausgestaltet und vom Bohrer durchsetzbar ist. Mittels der zweiten Reinigungsbürste wird der rotierende Bohrer abgebürstet, insbesondere läßt sich auf konstruktiv einfache Weise mindestens eine Bohrnut, in der der Bohrschmutz aus dem Bohrloch herausgeführt wird, abreinigen.

Bei einer besonders vorteilhaften Ausführungsform weist eine zweite Reinigungsbürste zumindest eine Borstenreihe auf, die parallel oder in einem spitzen Winkel zur Bohrerlängsachse ausgerichtet ist. Der in der Bohrnut des Bohrers aus dem Bohrloch herausgeführte Bohrschmutz wird bei einer derartigen Ausgestaltung innerhalb des Gehäuses seitlich der mindestens einen Borstenreihe der zweiten Reinigungsbürste zugeführt und kann von dieser zuverlässig abgebürstet werden.

Bevorzugt ist eine zweite Reinigungsbürste als Doppelbürste ausgebildet und weist zwei einander zugewandte Borstenreihen auf, die zwischen sich den Bohrer aufnehmen. Hierbei ist es von besonderem Vorteil, wenn die beiden Borstenreihen parallel oder in einem spitzen Winkel zur Bohrerlängsachse ausgerichtet sind. Eine derartige Ausrichtung ist allerdings nicht zwingend erforderlich, es kann auch vorgesehen sein, daß die beiden Borstenreihen eine Ausrichtung senkrecht zur Bohrerlängsachse aufweisen.

Um zu vermeiden, daß sich während des Bohrens zwischen dem Untergrund und der Stirnwand des Gehäuses Bohrschmutz ansammeln kann, ist bei einer besonders vorteilhaften Ausführungsform vorgesehen, daß die stirnseitige Gehäuseöffnung von einer Schmutzführungshülse durchgriffen ist. Mittels der Schmutzführungshülse wird im Bereich der stirnseitigen Gehäuseöffnung Bohrschmutz zuverlässig in den Bohrschmutzsammelraum des Gehäuses überführt.

Von besonderem Vorteil ist es, wenn die Schmutzführungshülse nach außen über die Stirnwand des Gehäuses hervorsteht. Dies hat den Vorteil, daß die Schmutzführungshülse unmittelbar an den Untergrund angelegt werden kann unter Vermeidung eines Zwischenraumes zwischen dem Untergrund und dem Bohrschmutzauffanggerät.

Günstig ist es hierbei, wenn die Schmutzführungshülse in ihrem nach außen vorstehenden Bereich von einem Dichtring umgeben ist. Letzterer ist vorzugsweise aus einem elastisch verformbaren Material gefertigt, insbesondere kann er derart ausgestaltet sein, daß er an leicht gekrümmte Oberflächen des Untergrundes anpaßbar und spaltfüllend ist, so daß der Bereich zwischen dem Bohrloch und der stirnseitigen Gehäuseöffnung des Bohrschmutzauffanggeräts auch auf einem rauhen Untergrund zuverlässig staubdicht abgedichtet ist.

Von Vorteil ist es, wenn die Schmutzführungshülse nach innen über die Stirnwand des Gehäuses hervorsteht. Sie kann dadurch innerhalb des Gehäuses einen von der Stirnwand abstehenden Kragen ausbilden, der verhindert, daß beim Abnehmen des Gehäuses vom Untergrund Bohrschmutz über die stirnseitige Gehäuseöffnung entweicht.

Günstig ist es, wenn sich die Schmutzführungshülse in das Innere des Gehäuses konisch erweitert. Dadurch ist sichergestellt, daß der sich auf der Schmutzführungshülse ablagernde Bohrschmutz selbsttätig an der Schmutzführungshülse entlang gleitet und somit in den Innenraum des Gehäuses überführt wird.

Die Schmutzführungshülse ist bei einer vorteilhaften Ausführungsform aus Metall gefertigt, insbesondere aus gehärtetem Metall.

Bei einer bevorzugten Ausführungsform ist die Schmutzführungshülse an der stirnseitigen Gehäuseöffnung auswechselbar gehalten.

Vorzugsweise ist die rückseitige Gehäuseöffnung von einer Führungsbuchse durchgriffen. Mittels der Führungsbuchse wird das Einführen des Bohrers in das Gehäuse und auch das Ausrichten des Bohrers beim Bohren vereinfacht.

Die Führungsbuchse steht bei einer vorteilhaften Ausführungsform nach innen und/oder nach außen über die Rückwand des Gehäuses hervor. Sie kann im Innern des Gehäuses einen von der Rückwand des Gehäuses abstehenden Kragen ausbilden, der beim Abnehmen des Gehäuses vom Untergrund die Gefahr vermindert, daß Bohrschmutz aus dem Gehäuse über die rückseitige Gehäuseöffnung entweicht.

Auf der Außenseite der Rückwand kann die Führungsbuchse einen Bund ausbilden, der an die Rückwand anlegbar ist.

Von besonderem Vorteil ist es, wenn die Führungsbuchse an der rückseitigen Gehäuseöffnung auswechselbar gehalten ist, denn dies gibt die Möglichkeit, in Abhängigkeit vom Durchmesser des zum Einsatz kommenden Bohrers eine entsprechend angepaßte Führungsbuchse an der rückseitigen Gehäuseöffnung festzulegen.

Vorzugsweise ist die Führungsbuchse aus Metall gefertigt, insbesondere aus gehärtetem Metall.

Es kann vorgesehen sein, daß der lichte Durchmesser der Führungsbuchse dem lichten Durchmesser der Schmutzführungshülse entspricht.

Das erfindungsgemäße Bohrschmutzauffanggerät kommt insbesondere zum Auffangen von Bohrschmutz für handgeführte Bohrmaschinen zum Einsatz. Um dem Benutzer das Halten der Bohrmaschine zu vereinfachen, ist bei einer besonders bevorzugten Ausführungsform vorgesehen, daß das Bohrschmutzauffanggerät eine Befestigungseinrichtung zur lösbaren Befestigung des Gehäuses an dem Untergrund aufweist. Dies ermöglicht es, ohne manuelle Unterstützung durch den Benutzer das Gehäuse an dem Untergrund festzulegen, beispielsweise an einer Wand oder an einer Decke. Damit ist das Auffangen des anfallenden Bohrschmutzes gewährleistet und der Benutzer kann die Bohrmaschine mit beiden Händen sicher erfassen.

Die Befestigungseinrichtung kann mit dem Gehäuse lösbar verbindbar sein. Dies gibt die Möglichkeit, die Befestigungseinrichtung auch unabhängig vom Bohrschmutzauffanggerät zu verwenden, beispielsweise zur temporären Befestigung eines Gegenstands an einer Wand oder einer Decke. Insbesondere kann mittels der Befestigungseinrichtung eine Libelle, eine Positionsbestimmungseinrichtung, eine Längenmeßeinrichtung oder eine Markierungseinrichtung, beispielsweise eine Lasermarkierungseinrichtung, an einer Wand oder einer Decke festgelegt werden. Damit können die Positionen von Bohrlöchern bestimmt und markiert werden, und anschließend können die Bohrungen eingebracht werden, wobei anfallender Bohrschmutz aufgefangen wird.

Es kann auch vorgesehen sein, daß die Befestigungseinrichtung in das Gehäuse des Bohrschmutzauffanggeräts integriert ist. Die Handhabung des Bohrschmutzauffanggeräts beim Befestigen am Untergrund und beim Auffangen von anfallendem Staub wird dadurch vereinfacht. Zusätzlich können eine Libelle, eine Positionsbestimmungseinrichtung, eine Längenmeßeinrichtung, insbesondere Lasermarkierungseinrichtung und/oder eine Halteeinrichtung zum Halten eines Gegenstands in das Gehäuse integriert sein oder am Gehäuse fixiert sein.

Die Befestigungseinrichtung kann ein Adhäsionselement, beispielsweise ein Klebepolster, umfassen, mit dessen Hilfe das Gehäuse am Untergrund zeitweilig festgelegt werden kann.

Von besonderem Vorteil ist es, wenn die Befestigungseinrichtung eine Halteplatte aufweist, die unter Zwischenschaltung eines Dichtrings an den Untergrund anlegbar ist, sowie eine Saugvorrichtung, die über eine Saugleitung mit einem vom Dichtring begrenzten Zwischenraum zwischen Halteplatte und Untergrund verbindbar ist, wobei der Zwischenraum mittels der Saugvorrichtung mit Unterdruck beaufschlagbar ist. Das Bohrschmutzauffanggerät kann somit pneumatisch an dem Untergrund festgelegt werden.

Von Vorteil ist es, wenn der Dichtring auswechselbar an der Halteplatte gehalten ist.

Die Saugvorrichtung kann manuell betätigbar sein. Von besonderem Vorteil ist es allerdings, wenn die Saugvorrichtung zumindest eine elektrische Vakuumpumpe aufweist. Mittels der Vakuumpumpe kann auf konstruktiv einfache Weise der Zwischenraum zwischen der Halteplatte und dem Untergrund, an den die Halteplatte anlegbar ist, abgesaugt werden.

Die Abdichtung des Zwischenraums erfolgt mit Hilfe des Dichtrings, der vorzugsweise aus einem flexiblen, an leicht gekrümmte Oberflächen anpaßbaren Material gefertigt ist und idealerweise spaltfüllend ausgebildet ist, um auch auf rauhen Untergründen eine luftdichte Abdichtung des Zwischenraumes sicherzustellen.

Es kann vorgesehen sein, daß die Befestigungseinrichtung mehrere Dichtringe aufweist, die jeweils einen Teilzwischenraum zwischen der Halteplatte und dem Untergrund abdichten, wobei der Teilzwischenraum mittels der Saugvorrichtung mit Unterdruck beaufschlagbar ist. Dies gibt die Möglichkeit, in mehreren gegeneinander abgedichteten Bereichen zwischen der Halteplatte und dem Untergrund einen Unterdruck bereitzustellen zur temporären Befestigung des Bohrschmutzauffanggeräts am Untergrund. Durch den Einsatz mehrerer Dichtringe kann der Einfluß möglicher Leckagestellen auf die Haltekraft der Befestigungseinrichtung verringert werden.

Bei einer besonders bevorzugten Ausführungsform ist die Vakuumpumpe als Membranpumpe ausgestaltet.

Von Vorteil ist es, wenn die Befestigungseinrichtung eine Batterie, insbesondere eine wiederaufladbare Batterie aufweist. Das Bohrschmutzauffanggerät kann somit trotz des Einsatzes der Befestigungseinrichtung autark ausgestaltet sein, der Anschluß an eine externe Energieversorgung ist ebenso entbehrlich wie der Anschluß an eine externe Unterdruckquelle.

Um zu vermeiden, daß Bohrschmutz zur Saugvorrichtung, insbesondere zu einer elektrischen Vakuumpumpe gelangen kann, ist bei einer vorteilhaften Ausführungsform in die Saugleitung ein Filterelement geschaltet. Anfallender Bohrschmutz wird am Filterelement abgeschieden und folglich die Saugvorrichtung nicht mit Bohrschmutz belastet. Insbesondere bei Einsatz einer elektrischen Vakkumpumpe kann mittels des Filterelements die Lebensdauer der Befestigungseinrichtung erheblich verlängert werden.

Bei einer konstruktiv besonders einfachen Ausgestaltung ist vorgesehen, daß das Gehäuse eine Zwischenwand aufweist, in die ein das Filterelement aufnehmender Strömungskanal eingeformt ist, der zumindest einen Teil der Saugleitung ausbildet. Die Zwischenwand kann eine Trennwand ausbilden zwischen dem Bohrschmutzsammelraum und einer Gehäusekammer, die insbesondere die elektrischen Bauteile der Befestigungseinrichtung aufnimmt.

So kann beispielsweise vorgesehen sein, daß die Zwischenwand doppelwandig ausgestaltet ist, wobei zwischen einer der Befestigungseinrichtung zugewandten ersten Wandschicht und einer dem Bohrschmutzsammelraum zugewandten zweiten Wandschicht der Strömungskanal verläuft.

Bei einer vorteilhaften Ausführungsform füllt das Filterelement den Strömungskanal vollständig aus. Vorzugsweise weist das Filterelement ein Papierfilter auf, das in den Strömungskanal eingesetzt ist.

Es kann vorgesehen sein, daß der Strömungskanal in den Zwischenraum zwischen dem Untergrund und der Halteplatte einmündet.

Bei einer vorteilhaften Ausführungsform steht der Strömungskanal über einen flexiblen Saugschlauch mit der Saugvorrichtung in Strömungsverbindung. Das Einsetzen der Saugvorrichtung, insbesondere einer elektrischen Vakuumpumpe, in eine Gehäusekammer des Bohrschmutzauffanggeräts wird dadurch vereinfacht.

Wie voranstehend erläutert, kann der Benutzer das Bohrschmutzauffanggerät vorzugsweise pneumatisch am Untergrund festlegen, indem der Zwischenraum zwischen der Halteplatte und dem Untergrund abgesaugt wird. Soll das Bohrschmutzauffanggerät wieder vom Untergrund entfernt werden, so wird die Saugvorrichtung ausgeschaltet, und aufgrund von Leckagen kann der Unterdruck im Zwischenraum so weit abfallen, daß das Gerät vom Untergrund entfernt werden kann. Leckagen sind allerdings bei einem sehr glatten Untergrund eher gering. Um in solchen Fällen das Abnehmen des pneumatisch am Untergrund festgelegten Bohrschmutzauffanggeräts zu vereinfachen, weist die Befestigungseinrichtung des Bohrschmutzauffanggeräts bei einer bevorzugten Ausführungsform ein Belüftungselement zur Belüftung des Zwischenraumes auf. Mittels des Belüftungselementes kann der Zwischenraum auf einfache Weise innerhalb sehr kurzer Zeit belüftet werden, so daß der Unterdruck im Zwischenraum entweicht und folglich das Gerät vom Untergrund abgenommen werden kann.

Es kann vorgesehen sein, das Belüftungselement elektrisch zu betätigen, beispielsweise kann vorgesehen sein, daß das Belüftungselement mit einer elektrischen Vakuumpumpe gekoppelt ist, so daß beim Ausschalten der Vakuumpumpe mittels des Belüftungselementes der Zwischenraum belüftet wird.

Bei einer konstruktiv besonders einfachen und kostengünstig herstellbaren Ausführungsform ist das Belüftungselement manuell betätigbar.

So kann beispielsweise vorgesehen sein, daß das Belüftungselement als federelastisch in seine Schließstellung vorgespanntes Belüftungsventil ausgestaltet ist, das vorzugsweise innerhalb des Gehäuses des Bohrschmutzauffanggerätes angeordnet ist. Der Benutzer kann zur Belüftung des Zwischenraumes die Schaltstellung des Belüftungsventiles ändern, so daß dieses seine Offenstellung einnimmt und der Zwischenraum über das Belüftungsventil belüftet wird.

Vorzugsweise ist das Belüftungselement mittels eines Betätigungselementes betätigbar, das die Rückwand des Gehäuses durchgreift. Das Betätigungselement ist dadurch dem Benutzer gut zugänglich. Insbesondere kann vorgesehen sein, daß das Betätigungselement als Schaltstößel ausgestaltet ist, der mit dem Belüftungsventil zusammenwirkt. Vorzugsweise ist der Schaltstößel innenseitig an der Rückwand des Gehäuses mittels eines Führungselementes, vorzugsweise einer Führungshülse, geführt.

Die nachfolgende Beschreibung vorteilhafter Ausführungsformen der Erfindung dient im Zusammenhang mit der Zeichnung der näheren Erläuterung. Es zeigen:
- Figur 1:: eine schematische Schnittansicht einer ersten Ausführungsform eines Bohrschmutzauffanggeräts;
- Figur 2:: eine Schnittansicht einer Reinigungseinrichtung des Bohrschmutzauffanggeräts längs der Linie 2-2 in Figur 1;
- Figur 3:: eine Ansicht in Richtung von Pfeil A aus Figur 2;
- Figur 4:: eine Schnittansicht einer Reinigungseinheit des Bohrschmutzauffanggeräts längs der Linie 4-4 in Figur 1;
- Figur 5:: eine Schnittansicht einer alternativen Ausgestaltung einer Reinigungseinrichtung oder einer Reinigungseinheit des Bohrschmutzauffanggeräts aus Figur 1, und
- Figur 6:: eine schematische Schnittansicht einer zweiten Ausführungsform eines Bohrschmutzauffanggeräts.

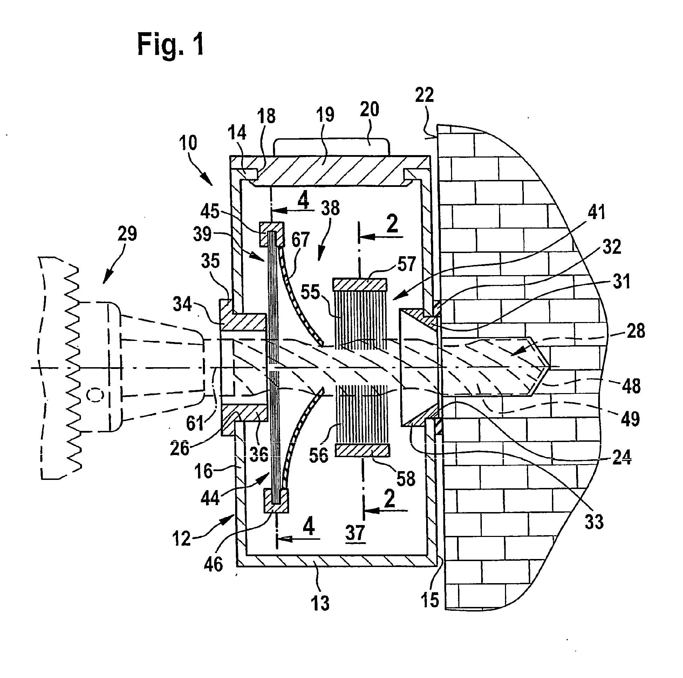

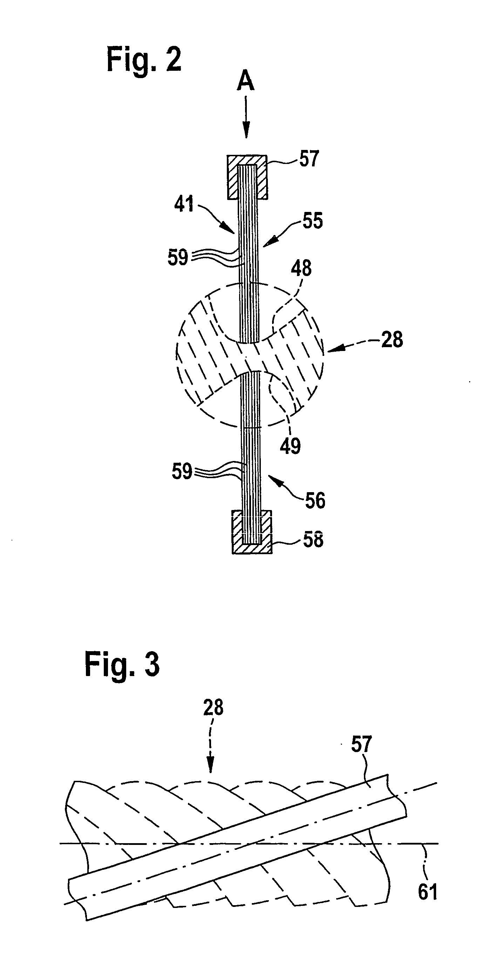

In den Figuren 1 bis 4 ist schematisch eine erste Ausführungsform eines erfindungsgemäßen Bohrschmutzauffanggeräts dargestellt, das insgesamt mit dem Bezugszeichen 10 belegt ist. Es umfaßt ein Gehäuse 12 mit einer Bodenwand 13 und einer Deckenwand 14, die über eine Stirnwand 15 und eine Rückwand 16 einstückig miteinander verbunden sind. Die Deckenwand 14 weist eine Deckenöffnung 18 auf, die von einem Deckel 19 verschließbar ist. Der Deckel 19 ist mittels an sich bekannter Rastelemente mit der Deckenwand 14 lösbar verrastbar. Er weist oberseitig eine Halterippe 20 auf, mit der er vom Benutzer ergriffen werden kann.

Das Bohrschmutzauffanggerät 10 kann an einen Untergrund, im dargestellten Ausführungsbeispiel an eine Gebäudewand 22 angelegt werden, um in die Gebäudewand 22 eine Bohrung einzubringen. Hierzu weist die Stirnwand 15 eine stirnseitige Gehäuseöffnung 24 auf und die Rückwand 16 umfaßt eine fluchtend zur stirnseitigen Gehäuseöffnung 24 ausgerichtete rückseitige Gehäuseöffnung 26. Die beiden Gehäuseöffnungen 24 und 26 können von einem gestrichelt dargestellten Bohrer 28 durchgriffen werden, der an einer in Figur 1 teilweise dargestellten Bohrmaschine 29 drehfest gehalten ist.

Die stirnseitige Gehäuseöffnung 24 ist von einer auswechselbaren Schmutzführungshülse 31 durchgriffen, die sich in Richtung auf das Innere des Gehäuses 12 konisch erweitert und nach innen und außen über die Stirnwand 15 hervorsteht. In ihrem nach außen hervorstehenden Bereich ist die Schmutzführungshülse 31 von einem flexiblen, elastisch verformbaren Dichtring 32 umgeben, der unmittelbar an die Oberfläche der Gebäudewand 22 anlegbar ist. Mit ihrem nach innen hervorstehenden Bereich bildet die Schmutzführungshülse einen innenseitig von der Stirnwand abstehenden Kragen 33.

Die rückseitige Gehäuseöffnung 26 ist von einer Führungsbuchse 34 durchgriffen, die ebenso wie die Schmutzführungshülse 31 aus gehärtetem Metall gefertigt ist und die an der rückseitigen Gehäuseöffnung 26 auswechselbar gehalten ist. Sie kann in die rückseitige Gehäuseöffnung 26 eingesetzt werden, wobei sie mit einem auskragenden Bund 35 außenseitig an der Rückwand 16 des Gehäuses 12 anliegt. Innenseitig bildet die Führungsbuchse 34 einen von der Rückwand 16 abstehenden Kragen 36 aus.

Das Gehäuse 12 definiert in seinem Inneren einen Bohrschmutzsammelraum 37 und nimmt eine den Bohrer 28 abreinigende Reinigungseinrichtung 38 auf. Die Reinigungseinrichtung 38 umfaßt eine den Bohrer 28 beim Herausziehen aus dem Gehäuse 12 abreinigende erste Reinigungseinheit in Form einer ersten Reinigungsbürste 39 sowie eine den rotierenden Bohrer beim Bohren abreinigende zweite Reinigungseinheit in Form einer zweiten Reinigungsbürste 41. Letztere ist zwischen der ersten Reinigungsbürste 39 und der stirnseitigen Gehäuseöffnung 24 angeordnet, die erste Reinigungsbürste 39 ist der rückseitigen Gehäuseöffnung 26 benachbart positioniert.

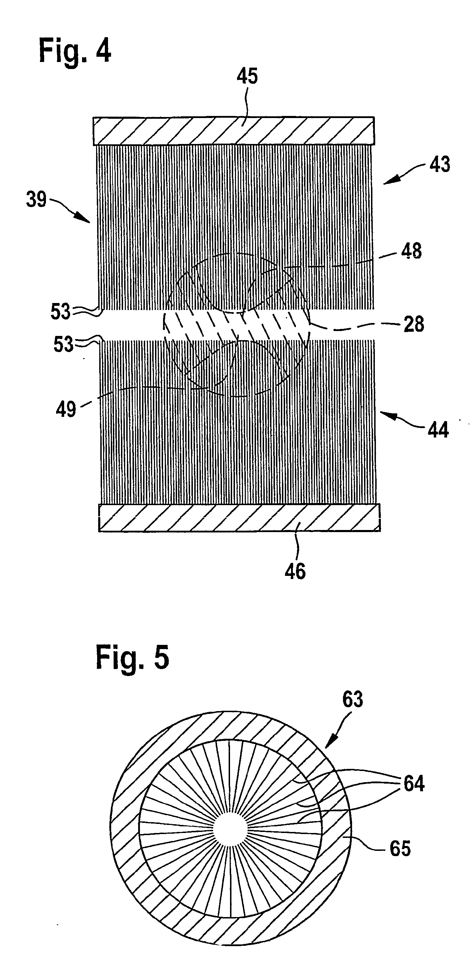

Wie insbesondere aus Figur 4 deutlich wird, ist die erste Reinigungsbürste 39 als Doppelbürste ausgestaltet und umfaßt zwei Borstenreihen 43, 44, die einander zugewandt sind und jeweils an einem im Querschnitt U-förmigen Borstenhalter 45 bzw. 46 gehalten sind. Die beiden Borstenreihen 43, 44 nehmen zwischen sich den in Figur 4 gestrichelt dargestellten Bohrer 28 auf. Dieser weist zwei einander diametral gegenüberliegende Bohrnuten 48, 49 auf, die den Bohrer 28 wendelförmig umgeben und Bohrschmutz, das heißt Bohrmaterial und Bohrstaub, aus dem Bohrloch 51 der Gebäudewand 22 in das Innere des Gehäuses 12 überführen. Nach erfolgtem Einbringen einer Bohrung kann der Bohrer 28 aus dem Gehäuse 12 herausgezogen werden, wobei er von den Borstenreihen 43, 44 abgestreift wird. Hierzu weisen die Borstenreihen 43, 44 Borsten 53 auf, deren Länge so gewählt ist, daß sie den Grund der Bohrnuten 48, 49 erreichen und diese vom Bohrschmutz befreien.

Die zweite Reinigungsbürste 41 ist ebenfalls als Doppelbürste ausgestaltet und weist zwei Borstenreihen 55, 56 auf, die einander zugewandt sind und zwischen sich den Bohrer 28 aufnehmen. Sie sind jeweils an einem im Querschnitt U-förmigen Borstenhalter 57 bzw. 58 gehalten und umfassen Borsten 59, deren Länge wiederum so gewählt ist, daß sie bis zum Grund der Bohrnuten 48, 49 reichen.

Während die Borstenreihen 43, 44 der ersten Reinigungsbürste 39 senkrecht zur Längsachse 61 des Bohrers 28 ausgerichtet sind, verlaufen die Borstenreihen 55, 56 der zweiten Reinigungsbürste 41 in einem spitzen Winkel zur Längsachse 61. Dies hat zur Folge, daß den Borstenreihen 55, 56 der Bohrschmutz vom rotierenden Bohrer 28 seitlich zugeführt wird, so daß er dann mittels der Borsten 49 ungefähr in Längsrichtung der Bohrnuten 48, 49 aus diesen heraus gebürstet werden kann. Mittels der zweiten Reinigungsbürste 41 kann somit während des Einsatzes des Bohrers 28 Bohrschmutz zuverlässig von diesem entfernt werden. Der Bohrschmutz sammelt sich im Bohrschmutzsammelraum 37 des Gehäuses 12 an. Das Gehäuse 12 kann über die Deckenöffnung 18 entleert werden.

In Figur 5 ist eine alternative Ausgestaltung sowohl der ersten Reinigungsbürste 39 als auch der zweiten Reinigungsbürste 41 dargestellt in Form einer Ringbürste 63. Diese umfaßt eine Vielzahl von radial zur Längsachse 61 des Bohrers 28 verlaufenden Borsten 64, die an einem Haltering 65 gehalten sind. Die zweite Reinigungsbürste 41 kann ebenso wie die erste Reinigungsbürste 39 als Ringbürste 63 ausgestaltet sein.

Auf der der zweiten Reinigungsbürste 41 zugewandten Seite ist die erste Reinigungsbürste 39 von einer Abdeckung 67 abgedeckt. Diese ist als flexible Gummimembran ausgebildet in Form des Mantels eines Kegelstrumpfes, der zentral vom Bohrer 28 durchgriffen werden kann. Mittels der Abdeckung 67 wird Bohrschmutz bezogen auf die Längsachse 61 radial nach außen geführt. Wird der Bohrer 28 aus dem Gehäuse 12 herausgezogen, so ist mittels der Abdeckung 67 in Kombination mit der ersten Reinigungsbürste 39 sichergestellt, daß der Bohrer 28 abgestreift und somit an diesem anhaftender Bohrschmutz entfernt wird und gleichzeitig ist gewährleistet, daß kein Bohrschmutz über die rückseitige Gehäuseöffnung 26 aus dem Gehäuse 12 entweichen kann. Dies gilt insbesondere bei vertikaler Ausrichtung des Bohrers 28, das heißt bei Einbringen einer Bohrung in eine Decke. Auch in diesem Fall wird sämtlicher Bohrschmutz, der beim Bohren anfällt, innerhalb des Gehäuses 12 gesammelt.

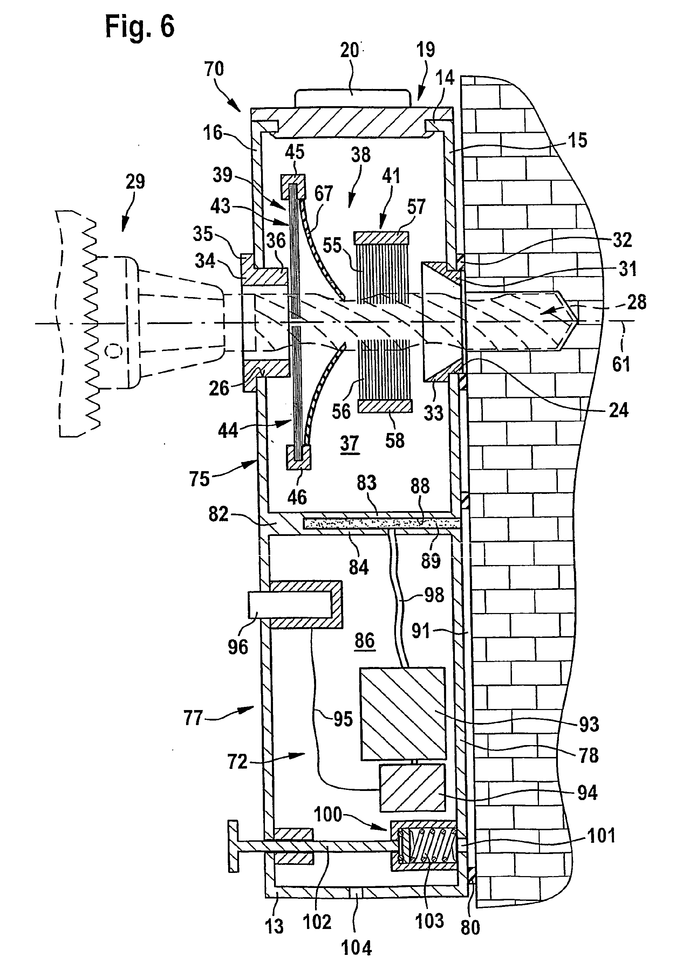

In Figur 6 ist eine zweite Ausführungsform eines insgesamt mit dem Bezugszeichen 70 belegten Bohrschmutzauffanggeräts dargestellt. In Figur 6 werden identische Bauteile mit denselben Bezugszeichen belegt wie in den Figuren 1 bis 5 und zur Vermeidung von Wiederholungen wird diesbezüglich auf die voranstehenden Erläuterungen Bezug genommen.

Das Bohrschmutzauffanggerät 70 unterscheidet sich vom Bohrschmutzauffanggerät 10 dadurch, daß zusätzlich eine Befestigungseinrichtung 72 zum Einsatz kommt, mit deren Hilfe das Bohrschmutzauffanggerät 70 zeitweilig an einem Untergrund, beispielsweise der Gebäudewand 22, befestigt werden kann.

Das Bohrschmutzauffanggerät 70 weist ein Gehäuse 74 auf mit einem ersten Gehäuseabschnitt 75, der identisch ausgestaltet ist wie das Gehäuse 12 des Bohrschmutzauffanggeräts 10, und mit einem zweiten Gehäuseabschnitt 77, der einstückig mit dem ersten Gehäuseabschnitt 75 verbunden ist, eine Gehäusekammer 86 definiert und die Befestigungseinrichtung 72 umfaßt. Der zweite Gehäuseabschnitt 77 weist eine fluchtend zur Stirnwand 15 angeordnete Halteplatte 78 auf, die unter Zwischenschaltung eines auswechselbaren Dichtrings 80 an die Gebäudewand 22 angelegt werden kann. Zwischen dem ersten Gehäuseabschnitt 75 und dem zweiten Gehäuseabschnitt 77 verläuft eine doppelwandige Zwischenwand 82, die mit einer ersten Wandschicht 83 eine Bodenwand für den Bohrschmutzsammelraum 37 des Bohrschmutzauffanggeräts 70 ausbildet und mit einer zweiten Wandschicht 84 die Gehäusekammer 86 oberseitig abschließt. Im Bereich zwischen der ersten Wandschicht 83 und der zweiten Wandschicht 84 verläuft ein Strömungskanal 88, der vollständig von einem Filterelement 89 ausgefüllt ist und in einen vom Dichtring 80 luftdicht abgedichteten Zwischenraum 91 zwischen der Gebäudewand 82 und der Halteplatte 78 einmündet.

Die Gehäusekammer 86 des zweiten Gehäuseabschnitts 77 nimmt eine Saugvorrichtung in Form einer elektrischen Membranpumpe 93 auf, an die eine elektrische Energieversorgungseinheit in Form einer Batterie 94 angeschlossen ist. Die Batterie 94 steht über ein Verbindungskabel 95 mit einem elektromechanischen Schaltorgan 96 in elektrischer Verbindung, und die Membranpumpe 93 steht über einen flexiblen Saugschlauch 98 mit dem Strömungskanal 88 in Strömungsverbindung. Mit Hilfe des Schaltorgans 96 kann die Membranpumpe 93 ein- und ausgeschaltet werden, und mittels der Membranpumpe 93 kann über den Saugschlauch 98 und den Strömungskanal 88 der Zwischenraum 91 abgesaugt und somit mit Unterdruck beaufschlagt werden.

Die Beaufschlagung des Zwischenraumes 91 mit Unterdruck hat zur Folge, daß das Bohrschmutzauffanggerät 70 an der Gebäudewand 22 anhaftet und folglich vom Benutzer beim Einbringen einer Bohrung nicht manuell gehalten werden muß. Dem Benutzer stehen somit beide Hände zur Verfügung zum Halten der Bohrmaschine 29.

Nach erfolgtem Einbringen einer Bohrung in die Gehäusewand 22 kann die Membranpumpe 93 wieder ausgeschaltet werden, so daß sich der Unterdruck im Zwischenraum 91 aufgrund von Leckagen abbaut und das Bohrschmutzauffanggerät 70 von der Gebäudewand 22 abgenommen werden kann. Liegt ein sehr glatter Untergrund vor, so treten nur sehr geringe Leckagen auf. Um dennoch das Bohrschmutzauffanggerät 70 ohne weiteres vom Untergrund abnehmen zu können, ist in der Gehäusekammer 86 ein Belüftungsventil 100 angeordnet, das eine Belüftungsöffnung 101 in der Halteplatte 78 verschließt und mittels eines Schaltstößels 102, der die Rückwand 16 durchgreift und nach außen über diese vorsteht, vom Benutzer entgegen der Wirkung einer Schließfeder 103 in seine Offenstellung überführt werden kann. In die Bodenwand 13 des Gehäuses 74 ist eine Durchgangsöffnung 104 eingeformt. Durch Betätigen des Schaltstößels 102 wird die Strömungsverbindung zwischen der Durchgangsöffnung 104 und der Belüftungsöffnung 101 freigegeben, so daß der Zwischenraum 91 belüftet wird. Gibt der Benutzer den Schaltstößel 102 nach erfolgter Belüftung wieder frei, so geht das Belüftungsventil 101 aufgrund der Wirkung der Schließfeder 103 selbsttätig in seine Schließstellung über.

Soll in die Gebäudewand 22 eine Bohrung eingebracht werden, so ist es beim Bohrschmutzauffanggerät 70 lediglich erforderlich, durch Betätigung des elektromechanischen Schaltorgans 96 die Membranpumpe 93 in Gang zu setzen, so daß der Zwischenraum 91 abgesaugt wird. Anschließend kann der Bohrer 28 durch die rückseitige Gehäuseöffnung 26 und die stirnseitige Gehäuseöffnung 24 des Gehäuses 74 hindurch geführt werden zum Einbringen der gewünschten Bohrung in die Gebäudewand 22. Sämtlicher Bohrschmutz wird beim Einbringen der Bohrung vom Bohrer 28 nach Art eines Schneckenförderers in das Innere des oberen Gehäuseabschnitts 75 überführt. Im ersten Gehäuseabschnitt 75 wird der Bohrschmutz dann mittels der zweiten Reinigungsbürste 41 und ergänzend mittels der ersten Reinigungsbürste 39 vom Bohrer 28 abgebürstet, so daß sich der Bohrschmutz im ersten Gehäuseabschnitt 75 ansammelt. Nach dem Einbringen der Bohrung kann der Bohrer aus dem ersten Gehäuseabschnitt 75 herausgezogen werden, wobei er von der ersten Reinigungsbürste 39 abgestreift wird. Das Bohrschmutzauffanggerät 70 kann anschließend von der Gebäudewand 22 gelöst werden, indem die Membranpumpe 93 wieder ausgeschaltet und das Belüftungsventil 100 vom Benutzer durch Drücken des Schaltstößels 102 kurzzeitig geöffnet wird. Der Zwischenraum 91 wird dann belüftet, daß das Gehäuse 74 von der Gebäudewand 22 gelöst werden kann.

## Patentansprüche

1. Bohrschmutzauffanggerät zum Auffangen von beim Einbringen einer Bohrung in einen Untergrund anfallendem Bohrschmutz, mit einem Gehäuse, das eine zum Untergrund ausrichtbare Stirnwand und eine im Abstand zu dieser angeordnete Rückwand umfaßt, wobei die Stirnwand und die Rückwand fluchtend zueinander angeordnete Gehäuseöffnungen aufweisen, die von einem Bohrer durchsetzbar sind, wobei das Gehäuse eine den Bohrer beim Herausziehen aus dem Gehäuse abreinigende Reinigungseinrichtung und einen Bohrschmutzsammelraum umgibt und wobei mittels der Reinigungseinrichtung (38) der rotierende Bohrer (28) beim Bohren abgereinigt werden kann, **dadurch gekennzeichnet, daß** die Reinigungseinrichtung (38) eine erste, den Bohrer (28) beim Herausziehen aus dem Gehäuse (12; 74) abreinigende Reinigungseinheit (39) und eine zweite, den rotierenden Bohrer (28) beim Bohren abreinigende Reinigungseinheit (41) aufweist, wobei die zweite Reinigungseinheit (41) zwischen der ersten Reinigungseinheit (39) und der stirnseitigen Gehäuseöffnung (24) angeordnet ist.

2. Bohrschmutzauffanggerät nach Anspruch 1, **dadurch gekennzeichnet, daß** die Reinigungseinrichtung (38) zum Abreinigen des Bohrers (28) beim Herausziehen aus dem Gehäuse (12; 74) zumindest eine erste Reinigungsbürste (39) umfaßt.

3. Bohrschmutzauffanggerät nach Anspruch 2, **dadurch gekennzeichnet, daß** eine erste Reinigungsbürste (63) ringförmig ausgestaltet und vom Bohrer (28) durchsetzbar ist.

4. Bohrschmutzauffanggerät nach Anspruch 2 oder 3, **dadurch gekennzeichnet, daß** eine erste Reinigungsbürste (39) als Doppelbürste ausgestaltet ist und zwei einander zugewandte Borstenreihen (43, 44) aufweist, die zwischen sich den Bohrer (28) aufnehmen.

5. Bohrschmutzauffanggerät nach einem der voranstehenden Ansprüche, **dadurch gekennzeichnet, daß** die Reinigungseinrichtung (38) eine Reinigungseinheit (39) aufweist, die die rückseitige Gehäuseöffnung (26) zumindest teilweise überdeckt.

6. Bohrschmutzauffanggerät nach einem der voranstehenden Ansprüche, **dadurch gekennzeichnet, daß** die Reinigungseinrichtung (38) eine Reinigungseinheit (39) umfaßt, die der stirnseitigen Gehäuseöffnung (24) zugewandt eine Abdeckung (67) aufweist.

7. Bohrschmutzauffanggerät nach Anspruch 6, **dadurch gekennzeichnet, daß** die Abdeckung (67) aus einem flexiblen Material gefertigt ist.

8. Bohrschmutzauffanggerät nach Anspruch 6 oder 7, **dadurch gekennzeichnet, daß** die Abdeckung (67) kegelmantelförmig ausgestaltet ist.

9. Bohrschmutzauffanggerät nach Anspruch 6, 7 oder 8, **dadurch gekennzeichnet, daß** die Abdeckung (67) die rückseitige Gehäuseöffnung (26) überdeckt.

10. Bohrschmutzauffanggerät nach einem der voranstehenden Ansprüche, **dadurch gekennzeichnet, daß** die Reinigungseinrichtung (38) zum Abreinigen des rotierenden Bohrers (28) zumindest eine zweite Reinigungsbürste (41) umfaßt.

11. Bohrschmutzauffanggerät nach Anspruch 10, **dadurch gekennzeichnet, daß** eine zweite Reinigungsbürste (63) ringförmig ausgestaltet und vom Bohrer (28) durchsetzbar ist.

12. Bohrschmutzauffanggerät nach Anspruch 10 oder 11, **dadurch gekennzeichnet, daß** eine zweite Reinigungsbürste (41) zumindest eine Borstenreihe (55, 56) aufweist, die parallel oder in einem spitzen Winkel zur Bohrerlängsachse (61) ausgerichtet ist.

13. Bohrschmutzauffanggerät nach Anspruch 10, 11 oder 12, **dadurch gekennzeichnet, daß** eine zweite Reinigungsbürste (41) als Doppelbürste ausgestaltet ist und zwei einander zugewandte Borstenreihen (55, 56) aufweist, die zwischen sich den Bohrer (28) aufnehmen.

14. Bohrschmutzauffanggerät nach einem der voranstehenden Ansprüche, **dadurch gekennzeichnet, daß** die stirnseitige Gehäuseöffnung (24) von einer Schmutzführuhgshülse (31) durchgriffen ist.

15. Bohrschmutzauffanggerät nach Anspruch 14, **dadurch gekennzeichnet, daß** die Schmutzführungshülse (31) nach außen über die Stirnwand (15) des Gehäuses (12; 74) hervorsteht.

16. Bohrschmutzauffanggerät nach Anspruch 15, **dadurch gekennzeichnet, daß** die Schmutzführungshülse (31) in ihrem nach außen vorstehenden Bereich von einem Dichtring (32) umgeben ist.

17. Bohrschmutzauffanggerät nach Anspruch 16, **dadurch gekennzeichnet, daß** der Dichtring (32) aus einem elastisch verformbaren Material gefertigt ist.

18. Bohrschmutzauffanggerät nach einem der Ansprüche 14 bis 17, **dadurch gekennzeichnet, daß** die Schmutzführungshülse (31) nach innen über die Stirnwand (15) des Gehäuses (12; 74) hervorsteht.

19. Bohrschmutzauffanggerät nach einem der Ansprüche 14 bis 18, **dadurch gekennzeichnet, daß** sich die Schmutzführungshülse (31) in das Innere des Gehäuses (12; 77) konisch erweitert.

20. Bohrschmutzauffanggerät nach einem der Ansprüche 14 bis 19, **dadurch gekennzeichnet, daß** die Schmutzführungshülse (31) aus Metall gefertigt ist.

21. Bohrschmutzauffanggerät nach einem der Ansprüche 14 bis 20, **dadurch gekennzeichnet, daß** die Schmutzführungshülse (31) an der stirnseitigen Gehäuseöffnung (24) auswechselbar gehalten ist.

22. Bohrschmutzauffanggerät nach einem der voranstehenden Ansprüche, **dadurch gekennzeichnet, daß** die rückseitige Gehäuseöffnung (26) von einer Führungsbuchse (34) durchgriffen ist.

23. Bohrschmutzauffanggerät nach Anspruch 22, **dadurch gekennzeichnet, daß** die Führungsbuchse (34) nach innen und/oder nach außen über die Rückwand (16) des Gehäuses (12; 74) hervorsteht.

24. Bohrschmutzauffanggerät nach Anspruch 22 oder 23, **dadurch gekennzeichnet, daß** die Führungsbuchse (34) an der rückseitigen Gehäuseöffnung (26) auswechselbar gehalten ist.

25. Bohrschmutzauffanggerät nach Anspruch 22, 23 oder 24, **dadurch gekennzeichnet, daß** die Führungsbuchse (34) aus Metall gefertigt ist.

26. Bohrschmutzauffanggerät nach einem der voranstehenden Ansprüche, **dadurch gekennzeichnet, daß** das Bohrschmutzauffanggerät (70) eine Befestigungseinrichtung (72) aufweist zur lösbaren Befestigung des Gehäuses (74) an dem Untergrund.

27. Bohrschmutzauffanggerät nach Anspruch 26, **dadurch gekennzeichnet, daß** die Befestigungseinrichtung (72) in das Gehäuse (74) integriert ist.

28. Bohrschmutzauffanggerät nach Anspruch 26 oder 27, **dadurch gekennzeichnet, daß** die Befestigungseinrichtung (72) eine Halteplatte (78) aufweist, die unter Zwischenschaltung eines Dichtrings (80) an den Untergrund (22) anlegbar ist, sowie eine Saugvorrichtung (93), die über eine Saugleitung (98, 88) mit einem vom Dichtring (80) begrenzten Zwischenraum (91) zwischen Halteplatte (78) und Untergrund (22) verbindbar ist, wobei der Zwischenraum (91) mittels der Saugvorrichtung (93) mit Unterdruck beaufschlagbar ist.

29. Bohrschmutzauffanggerät nach Anspruch 28, **dadurch gekennzeichnet, daß** die Saugvorrichtung zumindest eine elektrische Vakuumpumpe (93) umfaßt.

30. Bohrschmutzauffanggerät nach Anspruch 29, **dadurch gekennzeichnet, daß** die Vakuumpumpe als Membranpumpe (93) ausgestaltet ist.

31. Bohrschmutzauffanggerät nach Anspruch 29 oder 30, **dadurch gekennzeichnet, daß** die Befestigungseinrichtung (72) eine Batterie (94) aufweist.

32. Bohrschmutzauffanggerät nach einem der Ansprüche 28 bis 31, **dadurch gekennzeichnet, daß** in die Saugleitung ein Filterelement (89) geschaltet ist.

33. Bohrschmutzauffanggerät nach einem der Ansprüche 28 bis 32, **dadurch gekennzeichnet, daß** das Gehäuse (74) eine Zwischenwand (82) aufweist, in die ein das Filterelement (89) aufnehmender Strömungskanal (88) eingeformt ist, der zumindest einen Teil der Saugleitung ausbildet.

34. Bohrschmutzauffanggerät nach Anspruch 33, **dadurch gekennzeichnet, daß** das Filterelement (89) den Strömungskanal (88) vollständig ausfüllt.

35. Bohrschmutzauffanggerät nach Anspruch 33 oder 34, **dadurch gekennzeichnet, daß** der Strömungskanal (88) in den Zwischenraum (91) zwischen dem Untergrund (22) und der Halteplatte (78) einmündet.

36. Bohrschmutzauffanggerät nach Anspruch 33, 34 oder 35, **dadurch gekennzeichnet, daß** der Strömungskanal (88) über einen flexiblen Saugschlauch (98) mit der Saugvorrichtung (93) in Strömungsverbindung steht.

37. Bohrschmutzauffanggerät nach einem der Ansprüche 28 bis 36, **dadurch gekennzeichnet, daß** die Befestigungseinrichtung (72) ein Belüftungselement (100) zur Belüftung des Zwischenraums (91) aufweist.

38. Bohrschmutzauffanggerät nach Anspruch 37, **dadurch gekennzeichnet, daß** das Belüftungselement (100) manuell betätigbar ist.

39. Bohrschmutzauffanggerät nach Anspruch 37 oder 38, **dadurch gekennzeichnet, daß** das Belüftungselement als federelastisch in seine Schließstellung vorgespanntes Belüftungsventil (100) ausgestaltet und innerhalb des Gehäuses (74) angeordnet ist.

40. Bohrschmutzauffanggerät nach einem der Ansprüche 37 bis 39, **dadurch gekennzeichnet, daß** das Belüftungselement (100) mittels eines Betätigungselementes (102) betätigbar ist, das die Rückwand (16) des Gehäuses (74) durchgreift.

## Claims

1. An appliance for collecting bore cuttings produced when a bore is drilled in a subsurface, with a housing which comprises a front wall capable of being orientated with respect to the subsurface and a rear wall arranged at a distance from the latter, wherein the front wall and the rear wall have housing openings which are arranged in alignment with one another and which are capable of having a drill pass through them, wherein the housing surrounds a drill-cuttings collection chamber and a cleaning device which cleans the drill as it is withdrawn out of the housing, and wherein the rotating drill (28) can be cleaned by means of the cleaning device (38) during the drilling, **characterized in that** the cleaning device (38) has a first cleaning unit (39) which cleans the drill (28) as it is withdrawn out of the housing (12; 74), and a second cleaning unit (41) which cleans the rotating drill (28) during the drilling, wherein the second cleaning unit (41) is arranged between the first cleaning unit (39) and the housing opening (24) at the front end.

2. An appliance for collecting bore cuttings according to Claim 1, **characterized in that** the cleaning device (38) comprises at least one first cleaning brush (39) for cleaning the drill (28) as it is withdrawn out of the housing (12; 74).

3. An appliance for collecting bore cuttings according to Claim 2, **characterized in that** a first cleaning brush (63) is constructed in the form of a ring and is capable of having the drill (28) pass through it.

4. An appliance for collecting bore cuttings according to Claim 2 or 3, **characterized in that** a first cleaning brush (39) is constructed in the form of a double brush and has two mutually facing rows of bristles (43, 44) which receive the drill (28) between themselves.

5. An appliance for collecting bore cuttings according to any one of the preceding Claims, **characterized in that** the cleaning device (38) has a cleaning unit (39) which covers the housing opening (26) at the rear at least in part.

6. An appliance for collecting bore cuttings according to any one of the preceding Claims, **characterized in that** the cleaning device (38) comprises a cleaning unit (39) which has a covering (67) facing the housing opening (24) at the front.

7. An appliance for collecting bore cuttings according to Claim 6, **characterized in that** the covering (67) is produced from a flexible material.

8. An appliance for collecting bore cuttings according to Claim 6 or 7, **characterized in that** the covering (67) is designed in the shape of a cone.

9. An appliance for collecting bore cuttings according to Claim 6, 7 or 8, **characterized in that** the covering (67) covers the housing opening (26) at the rear.

10. An appliance for collecting bore cuttings according to any one of the preceding Claims, **characterized in that** the cleaning device (38) comprises at least one second cleaning brush (41) for cleaning the rotating drill (28).

11. An appliance for collecting bore cuttings according to Claim 10, **characterized in that** a second cleaning brush (63) is constructed in the form of a ring and is capable of having the drill (28) pass through it.

12. An appliance for collecting bore cuttings according to Claim 10 or 11, **characterized in that** a second cleaning brush (41) has at least one row of bristles (55, 56) which is orientated parallel to or at an acute angle to the longitudinal axis (61) of the drill.

13. An appliance for collecting bore cuttings according to Claim 10, 11 or 12, **characterized in that** a second cleaning brush (41) is constructed in the form of a double brush and has two mutually facing rows of bristles (55, 56) which receive the drill (28) between themselves.

14. An appliance for collecting bore cuttings according to any one of the preceding Claims, **characterized in that** the housing opening (24) at the front has a cuttings-guidance sleeve (31) passing through it.

15. An appliance for collecting bore cuttings according to Claim 14, **characterized in that** the cuttings-guidance sleeve (31) projects outwards beyond the front wall (15) of the housing (12; 74).

16. An appliance for collecting bore cuttings according to Claim 15, **characterized in that** the cuttings-guidance sleeve (31) is surrounded by a sealing ring (32) in its region projecting outwards.

17. An appliance for collecting bore cuttings according to Claim 16, **characterized in that** the sealing ring (32) is produced from a resiliently deformable material.

18. An appliance for collecting bore cuttings according to any one of Claims 14 to 17, **characterized in that** the cuttings-guidance sleeve (31) projects inwards beyond the front wall (15) of the housing (12; 74).

19. An appliance for collecting bore cuttings according to any one of Claims 14 to 18, **characterized in that** the cuttings-guidance sleeve (31) is enlarged in a conical manner into the interior of the housing (12; 77).

20. An appliance for collecting bore cuttings according to any one of Claims 14 to 19, **characterized in that** the cuttings-guidance sleeve (31) is produced from metal.

21. An appliance for collecting bore cuttings according to any one of Claims 14 to 20, **characterized in that** the cuttings-guidance sleeve (31) is held in an interchangeable manner at the housing opening (24) at the front.

22. An appliance for collecting bore cuttings according to any one of the preceding Claims, **characterized in that** the housing opening (26) at the rear has a guiding bush (34) passing through it.

23. An appliance for collecting bore cuttings according to Claim 22, **characterized in that** the guiding bush (34) projects inwards and/or outwards beyond the rear wall (16) of the housing (12; 74).

24. An appliance for collecting bore cuttings according to Claim 22 or 23, **characterized in that** the guiding bush (34) is held in an interchangeable manner at the housing opening (26) at the rear.

25. An appliance for collecting bore cuttings according to Claim 22, 23 or 24, **characterized in that** the guiding bush (34) is produced from metal.

26. An appliance for collecting bore cuttings according to any one of the preceding Claims, **characterized in that** the appliance (70) for collecting bore cuttings has a fastening device (72) for fastening the housing (74) to the subsurface in a releasable manner.

27. An appliance for collecting bore cuttings according to Claim 26, **characterized in that** the fastening device (72) is integrated into the housing (74).

28. An appliance for collecting bore cuttings according to Claim 26 or 27, **characterized in that** the fastening device (72) has a holding plate (78), which is capable of being laid on the subsurface (22) with the interposition of a sealing ring (80), and a suction apparatus (93) which is capable of being connected by way of a suction line (98, 88) to an interspace (91) bounded by the sealing ring (80) between the holding plate (78) and the subsurface (22), wherein the interspace (91) is capable of being acted upon with under-pressure by means of the suction apparatus (93).

29. An appliance for collecting bore cuttings according to Claim 28, **characterized in that** the suction apparatus comprises at least one electrical vacuum pump (93).

30. An appliance for collecting bore cuttings according to Claim 29, **characterized in that** the vacuum pump is constructed in the form of a diaphragm pump (93).

31. An appliance for collecting bore cuttings according to Claim 29 or 30, **characterized in that** the fastening device (72) has a battery (94).

32. An appliance for collecting bore cuttings according to any one of Claims 28 to 31, **characterized in that** a filter element (89) is inserted into the suction line.

33. An appliance for collecting bore cuttings according to any one of Claims 28 to 32, **characterized in that** the housing (74) has a partition wall (82) in which is formed a flow duct (88) which receives the filter element (89) and which forms at least part of the suction line.

34. An appliance for collecting bore cuttings according to Claim 33, **characterized in that** the filter element (89) fills the flow duct (88) completely.

35. An appliance for collecting bore cuttings according to Claim 33 or 34, **characterized in that** the flow duct (88) opens into the interspace (91) between the subsurface (22) and the holding plate (78).

36. An appliance for collecting bore cuttings according to Claim 33, 34 or 35, **characterized in that** the flow duct (88) is connected in terms of flow to the suction apparatus (93) by way of a flexible suction hose (98).

37. An appliance for collecting bore cuttings according to any one of Claims 28 to 36, **characterized in that** the fastening device (72) has an aerating element (100) for aerating the interspace (91).

38. An appliance for collecting bore cuttings according to Claim 37, **characterized in that** the aerating element (100) is capable of being actuated manually.

39. An appliance for collecting bore cuttings according to Claim 37 or 38, **characterized in that** the aerating element is constructed in the form of an aerating valve (100) prestressed in a resilient manner in its closed position and is arranged inside the housing (74).

40. An appliance for collecting bore cuttings according to any one of Claims 37 to 39, **characterized in that** the aerating element (100) is capable of being actuated by means of an actuating element (102) which passes through the rear wall (16) of the housing (74).

## Revendications

1. Appareil collecteur de déchets de perçage, destiné à collecter des déchets de perçage tombant sur le sol pendant la réalisation d'un perçage, ledit appareil comportant un boîtier qui comprend une paroi frontale orientable par rapport au sol et une paroi arrière placée à distance de la paroi frontale, ladite paroi frontale et ladite paroi arrière comportant des ouvertures de boîtier qui sont disposées en alignement l'une par rapport à l'autre et qui peuvent être traversées par un foret, le boîtier entourant un dispositif de nettoyage nettoyant le foret lorsqu'il est retiré du boîtier et un espace de collecte de déchets de perçage, et le foret en rotation (28) pouvant être nettoyé lors du perçage au moyen du dispositif de nettoyage (38), **caractérisé en ce que** le dispositif de nettoyage (38) comporte une première unité de nettoyage (39) qui nettoie le foret (28) lorsqu'il est retiré du boîtier (12 ; 74) et un deuxième dispositif de nettoyage (41) qui nettoie le foret en rotation (28) lors du perçage, la deuxième unité de nettoyage (41) étant disposée entre la première unité de nettoyage (39) et l'ouverture de boîtier (24) du côté frontal.

2. Appareil collecteur de déchets de perçage selon la revendication 1, **caractérisé en ce que** le dispositif de nettoyage (38) destiné à nettoyer le foret (28) lorsqu'il est retiré du boîtier (12 ; 74) comporte au moins une première brosse de nettoyage (39).

3. Appareil collecteur de déchets de perçage selon la revendication 2, **caractérisé en ce qu'**une première brosse de nettoyage (63) a une conformation annulaire et peut être traversée par le foret (28).

4. Appareil collecteur de déchets de perçage selon la revendication 2 ou 3, **caractérisé en ce qu'**une première brosse de nettoyage (39) est conformée en double brosse, et comporte deux rangées de crins (43, 44) qui sont opposées l'une à l'autre et qui laissent passer entre elles le foret (28).

5. Appareil collecteur de déchets de perçage selon l'une des revendications précédentes, **caractérisé en ce que** le dispositif de nettoyage (38) comporte une unité de nettoyage (39) qui recouvre au moins partiellement l'ouverture de boîtier (26) du côté arrière.

6. Appareil collecteur de déchets de perçage selon l'une des revendications précédentes, **caractérisé en ce que** le dispositif de nettoyage (38) comporte une unité de nettoyage (39) qui comporte un capot (67) qui est dirigé vers l'ouverture de boîtier (24) du côté frontal.

7. Appareil collecteur de déchets de perçage selon la revendication 6, **caractérisé en ce que** le capot (67) est fabriqué à partir d'un matériau flexible.

8. Appareil collecteur de déchets de perçage selon la revendication 6 ou 7, **caractérisé en ce que** le capot (67) a une conformation conique.

9. Appareil collecteur de déchets de perçage selon la revendication 6, 7 ou 8, **caractérisé en ce que** le capot (67) recouvre l'ouverture de boîtier (26) du côté arrière.

10. Appareil collecteur de déchets de perçage selon l'une des revendications précédentes, **caractérisé en ce que** le dispositif de nettoyage (38) destiné à nettoyer le foret en rotation (28) comporte au moins une deuxième brosse de nettoyage (41).

11. Appareil collecteur de déchets de perçage selon la revendication 10, **caractérisé en ce qu'**une deuxième brosse de nettoyage (63) a une conformation annulaire et peut être traversée par le foret (28).

12. Appareil collecteur de déchets de perçage selon la revendication 10 ou 11, **caractérisé en ce qu'**une deuxième brosse de nettoyage (41) comporte au moins une rangée de crins (55, 56) qui est orientée parallèlement à l'axe longitudinal (61) du foret ou en formant un angle aigu par rapport à celui-ci.

13. Appareil collecteur de déchets de perçage selon la revendication 10, 11 ou 12, **caractérisé en ce qu'**une deuxième brosse de nettoyage (41) est conformée en double brosse, et comporte deux rangées de crins (55, 56) qui sont dirigées l'une vers l'autre et qui laissent passer entre elles le foret (28).

14. Appareil collecteur de déchets de perçage selon l'une des revendications précédentes, **caractérisé en ce que** l'ouverture de boîtier (24) du côté frontal est pénétrée par un manchon de guidage de déchets (31).

15. Appareil collecteur de déchets de perçage selon la revendication 14, **caractérisé en ce que** le manchon de guidage de déchets (31) fait saillie vers l'extérieur au-delà de la paroi frontale (15) du boîtier (12 ; 74).

16. Appareil collecteur de déchets de perçage selon la revendication 15, **caractérisé en ce que** le manchon de guidage de déchets (31) est entouré, dans sa région saillant vers l'extérieur, par une bague d'étanchéité (32).

17. Appareil collecteur de déchets de perçage selon la revendication 16, **caractérisé en ce que** la bague d'étanchéité (32) est fabriquée à partir d'un matériau déformable élastiquement.

18. Appareil collecteur de déchets de perçage selon l'une des revendications 14 à 17, **caractérisé en ce que** le manchon de guidage de déchets (31) fait saillie vers l'intérieur au-delà de la paroi frontale (15) du boîtier (12 ; 74).

19. Appareil collecteur de déchets de perçage selon l'une des revendications 14 à 18, **caractérisé en ce que** le manchon de guidage de déchets (31) s'évase en cône vers l'intérieur du boîtier (12 ; 77).

20. Appareil collecteur de déchets de perçage selon l'une des revendications 14 à 19, **caractérisé en ce que** le manchon de guidage de déchets (31) est fabriqué à partir d'un métal.

21. Appareil collecteur de déchets de perçage selon l'une des revendications 14 à 20, **caractérisé en ce que** le manchon de guidage de déchets (31) est maintenu de façon amovible au niveau de l'ouverture de boîtier (24) du côté frontal.

22. Appareil collecteur de déchets de perçage selon l'une des revendications précédentes, **caractérisé en ce que** l'ouverture de boîtier (26) du côté arrière est pénétrée par un manchon de guidage (34).

23. Appareil collecteur de déchets de perçage selon la revendication 22, **caractérisé en ce que** le manchon de guidage (34) fait saillie vers l'intérieur et/ou vers l'extérieur au-delà de la paroi arrière (16) du boîtier (12 ; 74).

24. Appareil collecteur de déchets de perçage selon la revendication 22 ou 23, **caractérisé en ce que** le manchon de guidage (34) est maintenu de façon amovible au niveau de l'ouverture de boîtier (26) du côté arrière.

25. Appareil collecteur de déchets de perçage selon la revendication 22, 23 ou 24, **caractérisé en ce que** le manchon de guidage (34) est fabriqué à partir d'un métal.

26. Appareil collecteur de déchets de perçage selon l'une des revendications précédentes, **caractérisé en ce que** l'appareil collecteur de déchets de perçage (70) comporte un dispositif de fixation (72) destiné à fixer le boîtier (74) au sol de façon amovible.

27. Appareil collecteur de déchets de perçage selon la revendication 26, **caractérisé en ce que** le dispositif de fixation (72) est intégré dans le boîtier (74).

28. Appareil collecteur de déchets de perçage selon la revendication 26 ou 27, **caractérisé en ce que** le dispositif de fixation (72) comporte une plaque de retenue (78) qui peut être placée sur le sol (22) par l'intermédiaire d'une bague d'étanchéité (80), ainsi qu'un dispositif d'aspiration (93) qui peut être relié, par l'intermédiaire d'une conduite d'aspiration (98, 88), à un espace intermédiaire (91), délimité par la bague d'étanchéité (80), entre la plaque de retenue (78) et le sol (22), ledit espace intermédiaire (91) étant soumis à une dépression au moyen du dispositif d'aspiration (93).

29. Appareil collecteur de déchets de perçage selon la revendication 28, **caractérisé en ce que** le dispositif d'aspiration comporte au moins une pompe à vide électrique (93).

30. Appareil collecteur de déchets de perçage selon la revendication 29, **caractérisé en ce que** la pompe à vide est conformée en pompe à membrane (93).

31. Appareil collecteur de déchets de perçage selon la revendication 29 ou 30, **caractérisé en ce que** le dispositif de fixation (72) comporte une batterie (94).

32. Appareil collecteur de déchets de perçage selon l'une des revendications 28 à 31, **caractérisé en ce qu'**un élément de filtration (89) est monté dans la conduite d'aspiration.

33. Appareil collecteur de déchets de perçage selon l'une des revendications 28 à 32, **caractérisé en ce que** le boîtier (74) comporte une paroi intermédiaire (82) dans laquelle est ménagé un canal d'écoulement (88) qui reçoit l'élément de filtration (89) et qui forme au moins une partie de la conduite d'aspiration.

34. Appareil collecteur de déchets de perçage selon la revendication 33, **caractérisé en ce que** l'élément de filtration (89) occuppe totalement le canal d'écoulement (88).

35. Appareil collecteur de déchets de perçage selon la revendication 33 ou 34, **caractérisé en ce que** le canal d'écoulement (88) débouche dans l'espace intermédiaire (91), entre le sol (22) et la plaque de retenue (78).

36. Appareil collecteur de déchets de perçage selon la revendication 33, 34 ou 35, **caractérisé en ce que** le canal d'écoulement (88) est en liaison d'écoulement avec le dispositif d'aspiration (93) par l'intermédiaire d'un tuyau d'aspiration flexible (98).

37. Appareil collecteur de déchets de perçage selon l'une des revendications 28 à 36, **caractérisé en ce que** le dispositif de fixation (72) comporte un élément de ventilation (100) destiné à ventiler l'espace intermédiaire (41).

38. Appareil collecteur de déchets selon la revendication 37, **caractérisé en ce que** l'élément de ventilation (100) est actionnable manuellement.

39. Appareil collecteur de déchets de perçage selon la revendication 37 ou 38, **caractérisé en ce que** l'élément de ventilation est conformé en un clapet de ventilation (100) qui est précontraint élastiquement par ressort dans sa position de fermeture et est disposé l'intérieur du boîtier (74).

40. Appareil collecteur de déchets de perçage selon l'une des revendications 37 à 39, **caractérisé en ce que** l'élément de ventilation (100) est actionnable au moyen d'un élément d'actionnement (102) qui traverse la paroi arrière (16) du boîtier (74).
